# EUROPÄISCHE PATENTANMELDUNG

(11) **EP 1 840 598 A2**
(43) Veröffentlichungstag der Anmeldung: **03.10.2007**
(21) Anmeldenummer: 07005356.6
(22) Anmeldetag: 15.03.2007
(51) Int. Cl.: G01V 1/00, G01V 3/08

(54) **Vorrichtung zur Detektion von Objekten innerhalb eines Überwachungsbereichs**

(30) Priorität: 28.03.2006 DE 102006014139
(71) Anmelder: Leuze electronic GmbH + Co. KG, 73277 Owen/Teck (DE)
(72) Erfinder: Patz, Jürgen, 72660 Beuren (DE); Bach, Roland, 72667 Schlaitdorf (DE)
(74) Vertreter: Ruckh, Rainer Gerhard

(57) **Zusammenfassung**

Die Erfindung betrifft eine Vorrichtung (1) zur Detektion von Objekten innerhalb eines Erfassungsbereichs. Die Vorrichtung (1) umfasst einen Sensor (4), welcher wahlweise als Ultraschallsensor oder als kapazitiver Sensor betreibbar ist.

## Beschreibung

Die Erfindung betrifft eine Vorrichtung zur Detektion von Objekten in einem Erfassungsbereich.

Derartige Vorrichtungen können insbesondere zur Unterscheidung von Einfach- und Mehrfachbögen eingesetzt werden.

Weiterhin können derartige Vorrichtungen auch zur Detektion von Etiketten auf Trägermaterialien eingesetzt werden.

Eine derartige Vorrichtung ist aus der DE 199 21 217 A1 bekannt. Bei dieser Vorrichtung ist zur Detektion von Etiketten auf einem Trägermaterial ein Ultraschallwellen emittierender Sender und ein Ultraschallwellen empfangenden Empfänger vorgesehen. Dabei wird das Trägermaterial mit den Etiketten im Zwischenraum zwischen Sender und Empfänger geführt. Je nachdem, ob zwischen Sender und Empfänger das Trägermaterial alleine oder eine auf dem Trägermaterial aufgebrachte Etikette von den Ultraschallwellen erfasst wird, werden die Ultraschallwellen in unterschiedlicher Weise abgeschwächt. Die entsprechenden Unterschiede des Empfangssignals am Ausgang des Empfängers werden dadurch erfasst, in dem das Empfangssignal mit einem Schwellwert verglichen wird. Dieser Schwellwert ist an die auftretenden Pegel der Empfangssignale durch einen Abgleichvorgang angepasst. Bei dem vor der Detektion der Etiketten durchgeführten Abgleichvorgang wird die Höhe des Schwellwerts bei zwischen Sender und Empfänger angeordnetem Trägermaterial und/oder einer dort angeordneten Etikette in Abhängigkeit des dabei registrierten Empfangssignals selbsttätig bestimmt.

Bei dieser Vorrichtung hat sich als nachteilig herausgestellt, dass insbesondere bei dickeren Trägermaterialien, die beispielsweise aus Papier bestehen, eine sichere Detektion von Etiketten nicht gewährleistet ist.

Um diesem Problem zu begegnen, wird in der nicht vorveröffentlichten DE 10 2005 020 255 eine Vorrichtung vorgeschlagen bei welcher wahlweise ein optischer Sensor oder Ultraschallsensor zur Etikettendetektion eingesetzt werden kann, um so eine sichere Etikettendetektion für ein breites Materialspektrum von Etiketten- und Trägermaterialien zu erreichen.

Während mit dem Ultraschallsensor besonders gut Etiketten auf transparenten Trägermaterialien detektiert werden können, eignet sich der optische Sensor insbesondere zur Detektion von Etiketten auf dickeren, nicht transparenten Trägermaterialien wie beispielsweise aus Papier bestehenden Trägermaterialien.

Der Erfindung liegt die Aufgabe zugrunde, eine Vorrichtung bereitzustellen, welche einen möglichst kompakten und kostengünstigen Aufbau aufweist und mit welcher ein breites Spektrum verschiedenartiger Objekte sicher detektierbar ist.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße Vorrichtung dient zur Detektion von Objekten innerhalb eines Erfassungsbereichs und umfasst einen Sensor, welcher wahlweise als Ultraschallsensor oder als kapazitiver Sensor betreibbar ist.

Da der Sensor der erfindungsgemäßen Vorrichtung wahlweise als Ultraschallsensor oder kapazitiver Sensor betrieben werden kann und somit eine Doppelfunktion erfüllt, wird bei äußerst geringen Kosten- und Konstruktionsaufwand bei der Herstellung der Vorrichtung eine hohe Funktionalität und ein breiter Anwendungsbereich dieser Vorrichtung erzielt.

Der Einsatz des sowohl als Ultraschallsensor als auch als kapazitiver Sensor betreibbaren Sensors führt im Vergleich zum Einsatz von separaten Ultraschallsensoren und kapazitiver Sensoren zu einer erheblichen Einsparung an Einzelkomponenten und zudem auch zu einer Reduktion des Aufwands der Ansteuerung und des Anschlusses der Sensorik an die elektronischen Komponenten der Vorrichtung zur Signalauswertung.

Die Betriebsart des Sensors kann über geeignete Schaltmittel einfach umgeschaltet werden. Die Umschaltung erfolgt vor der Betriebsphase der Vorrichtung oder vorzugsweise sogar während des Betriebs der Vorrichtung, das heißt während der Objektdetektion. Dadurch kann die Vorrichtung flexibel und schnell an sich ändernde Einsatzbedingungen angepasst werden.

Die erfindungsgemäße Vorrichtung kann vorteilhaft in Druckmaschinen und dergleichen zur Unterscheidung von Einfach- und Mehrfachbögen, die aus Papier, Karten und dergleichen bestehen können, eingesetzt werden. Weiterhin kann die erfindungsgemäße Vorrichtung zur Detektion von Etiketten auf Trägermaterialien eingesetzt werden. In beiden Fällen können die Materialbeschaffenheiten der zu detektierenden Objekte stark unterschiedlich sein, so dass das gesamte Spektrum dieser Objekte mit einem Sensortyp nicht mehr erfassbar ist. Mit dem sowohl als Ultraschallsensor als auch als kapazitiver Sensor betreibbarer Sensor der erfindungsgemäßen Vorrichtung kann jedoch ein derartig breites Spektrum von Objekten erfasst werden.

Die Erfindung wird nachstehend anhand der Zeichnung erläutert:

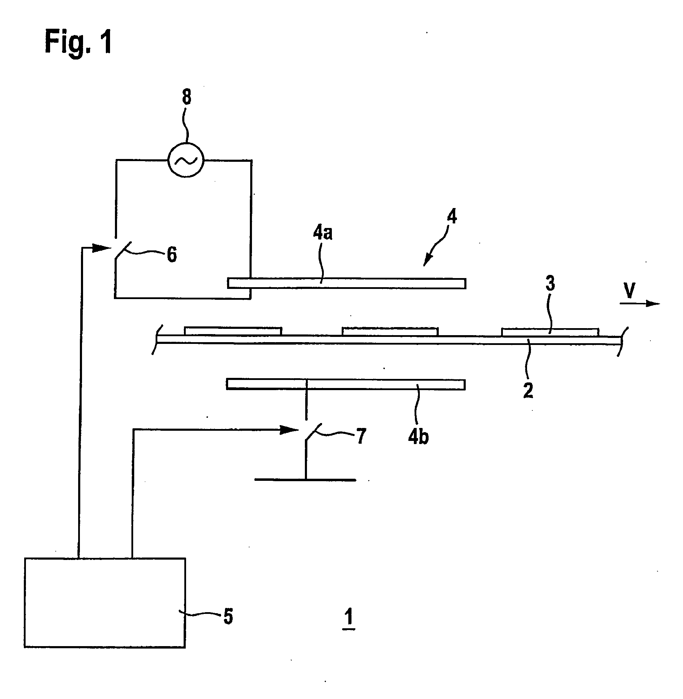

- Figur 1:: Schematische Darstellung eines Ausführungsbeispiels einer Vorrichtung zur Detektion von Objekten in einem Erfassungsbereich.

Figur 1 zeigt ein Ausführungsbeispiel einer Vorrichtung 1 zur Detektion von Objekten in einem Erfassungsbereich. Die Objekte sind im vorliegenden Fall von auf einem Trägermaterial 2 gebildeten Etiketten 3 gebildet, welche mittels einer nicht dargestellten Fördereinrichtung in einer mit v bezeichneten Transportrichtung gefördert werden.

Die Vorrichtung 1 umfasst einen Sensor 4, welcher als Sensorkomponenten zwei in Abstand gegenüberliegende metallisierte Folien 4a, b aufweist. Die metallisierte Folien 4a, b sind im vorliegenden Fall flächengleich ausgebildet, wobei deren Querschnittsflächen beispielsweise rechteckig oder kreisförmig ausgebildet sind. Die metallisierte Folien 4a, b sind jeweils in einer horizontalen Ebene (senkrecht zur Zeichenebene) in einem vorgegebenen Abstand gegenüberliegend angeordnet. Die metallisierte Folien 4a, b sind dabei in nicht gesondert dargestellten Halterungen gelagert. Der Zwischenraum zwischen den metallisierte Folien 4a, b bildet den Erfassungsbereich, durch welchen das Trägermaterial 2 mit den Etiketten 3 hindurchbewegt wird. In der Darstellung gemäß Figur 1 liegt die Ebene des Trägermaterials 2 zwischen den metallisierte Folien 4a, b. Prinzipiell kann das Trägermaterial 2 auch auf der unteren metallisierten Folie 4b aufliegen.

Die Auswertung der Sensorsignale des Sensors 4 sowie die Ansteuerung des Sensors 4 zur Vorgabe dessen Betriebsart erfolgt in einer Auswerteeinheit 5, welche von einem Mikroprozessor oder dergleichen gebildet sein kann. Der Sensor 4 kann sowohl als Ultraschallsensor als auch als kapazitiver Sensor betrieben werden. Die Vorgabe der Betriebsart erfolgt durch Ansteuerung von Schaltmitteln durch die Auswerteeinheit 5. Diese Schaltmittel umfassen insbesondere zwei in Figur 1 dargestellte Schalter 6, 7.

In einer ersten Betriebsart wird der Sensor als Ultraschallsensor betrieben. Die erste metallisierte Folie 4a bildet dabei einen Ultraschallsender. Hierzu wird diese metallisierte Folie 4a durch Schließen des Schalters 6 an eine von einer Spannungsquelle 8 generierte Hochspannung angelegt, wodurch die metallisierte Folie 4a in Schwingungen versetzt wird und gerichtete Ultraschallwellen in Richtung der zweiten metallisierten Folie 4b, welche einen Ultraschallempfänger bildet, emittiert. In diesem Modus bleibt der Schalter 7 geöffnet.

Je nachdem, ob sich im Erfassungsbereich zwischen dem Ultraschallsender und dem Ultraschallempfänger nur das Trägermaterial 2 alleine oder eine auf dem Trägermaterial 2 angeordnete Etikette 3 befindet, werden die Ultraschallwellen unterschiedlich geschwächt. Zur Detektion der Etiketten 3 kann daher im einfachsten Fall das am Ausgang des Ultraschallempfänger anstehende Signal mit einem Schwellwert bewertet werden. Auf diese Weise wird ein binäres Schaltsignal generiert, dessen Schaltzustände angeben, ob sich eine Etikette 3 im Erfassungsbereich befindet oder nicht.

In einer zweiten Betriebsart wird der Sensor 4 als kapazitiver Sensor betrieben. Hierzu wird über die Auswerteeinheit 5 der Schalter 6 geöffnet. In diesem Fall bildet die metallisierte Folie 4a eine Elektrode des kapazitiven Sensors. Gleichzeitig wird der Schalter 7 geschlossen, so dass die untere metallisierte Folie 4b auf Massepotential liegt und eine Gegenelektrode des kapazitiven Sensors bildet.

Je nachdem, ob sich nur das Trägermaterial 2 oder eine Etikette 3 auf dem Trägermaterial 2 im Erfassungsbereich befindet, ergeben sich unterschiedliche Kapazitätswerte als Signale des kapazitiven Sensors. Auch diese Signale werden zur Generierung eines binären Schaltsignals in der Auswerteeinheit 5 mit einem Schwellwert bewertet, wobei die Schaltzustände des Schaltsignals angeben, ob sich eine Etikette 3 im Erfassungsbereich befindet oder nicht.

### Bezugszeichenliste

- (1): Vorrichtung
- (2): Trägermaterial
- (3): Etikette
- (4): Sensor
- (4a): metallisierte Folie
- (4b): metallisierte Folie
- (5): Auswerteeinheit
- (6): Schalter
- (7): Schalter
- (8): Spannungsquelle

## Patentansprüche

1. Vorrichtung zur Detektion von Objekten innerhalb eines Erfassungsbereichs, umfassend einen Sensor, welcher wahlweise als Ultraschallsensor oder als kapazitiver Sensor betreibbar ist.

2. Vorrichtung nach Anspruch 1, **dadurch gekennzeichnet, dass** der Sensor (4) zwei in Abstand gegenüberliegende metallisierte Folien (4a, b) aufweist, welche wahlweise als Komponenten eines Ultraschallsensors oder eines kapazitiven Sensors nutzbar sind.

3. Vorrichtung nach Anspruch 2, **dadurch gekennzeichnet, dass** bei Betrieb des Sensors (4) als Ultraschallsensor eine erste metallisierte Folie (4a) als Ultraschallsender und eine zweite metallisierte Folie (4b) als Ultraschallempfänger verwendet wird.

4. Vorrichtung nach Anspruch 3, **dadurch gekennzeichnet, dass** an die den Ultraschallsender bildende metallisierte Folie (4a) eine Hochspannung angelegt ist.

5. Vorrichtung nach einem der Ansprüche 2 bis 4, **dadurch gekennzeichnet, dass** bei Betrieb des Sensors (4) als kapazitiver Sensor dessen Elektroden von den metallisierten Folien (4a, b) gebildet sind.

6. Vorrichtung nach einem der Ansprüche 1 bis 5, **dadurch gekennzeichnet, dass** diese Schaltmittel zur Umschaltung der Betriebsart des Sensors (4) aufweist.

7. Vorrichtung nach einem der Ansprüche 1 bis 6, **dadurch gekennzeichnet, dass** diese eine Auswerteeinheit (5) zur Auswertung der Signale des Sensors (4) aufweist.

8. Vorrichtung nach einem der Ansprüche 1 bis 7, **dadurch gekennzeichnet, dass** mit dieser auf Trägermaterialien (2) aufgebrachte Etiketten (3) erfassbar sind.

9. Vorrichtung nach einem der Ansprüche 1 bis 7, **dadurch gekennzeichnet, dass** mit dieser Einfach- und Mehrfachbögen detektierbar sind.
